# EUROPEAN PATENT SPECIFICATION

(11) **EP 3 334 253 B1**
(45) Date of publication and mention of the grant of the patent: **26.06.2019**
(21) Application number: 17191143.1
(22) Date of filing: 14.09.2017
(51) Int. Cl.: H05B 33/08, H05B 37/02

(54) **REMOTE CONTROL METHOD FOR LIGHTING FIXTURES**
FERNBEDIENUNGSVERFAHREN FÜR BELEUCHTUNGSANLAGEN
PROCÉDÉ DE COMMANDE À DISTANCE POUR DES APPAREILS D'ÉCLAIRAGE

(30) Priority: 07.12.2016 IT 201600124486
(43) Date of publication of application: 13.06.2018
(73) Proprietor: Beghelli S.p.A., 40053 Monteveglio-Valsamoggia (BO) (IT)
(72) Inventor: BEGHELLI, Gian Pietro, 40053 Monteveglio-Valsamoggia (BO) (IT)
(74) Representative: Burchielli, Riccardo

(56) References cited:
- WO-A2-2014/134637
- US-A1- 2012 026 726
- US-A1- 2012 098 655
- US-B1- 9 328 883

## Description

This invention relates generically to a system and to a relative method for the remote control of lighting fixtures and emergency lighting equipment.

More specifically, the invention relates to a system which uses components (LEDs, displays, video cameras and luminosity sensors) integrated in the smartphones for communicating (interrogating and/or programming) with the lighting apparatuses, in particular, with the emergency lighting apparatuses and also managing a maintenance register of the systems on "cloud" in compliance with the applicable technical standards and regulations; in this way, it is possible to carry out an immediate and thorough diagnosis of any fault of the apparatus and immediately and automatically send the request for maintenance and/or spare parts.

According to the technical solution of the invention the lighting apparatus and/or emergency lighting apparatus is equipped with a light sensor, an internal decoding circuit and a an optical collector, so that it can be controlled by means of a light beam, suitably adjusted and set up, coming from a smartphone, which is in turn controlled by a suitable application program (APP).

The emergency lighting apparatus also integrates an LED module subject to control of a logic circuit so as to generate digital optical signals directed towards a receiving apparatus and from this captured using the integrated optical devices.

Apparatuses and methods for remotely controlling lighting systems and, in particular, emergency lighting systems are described in prior art documents US9328883 and WO2014134637.

It is known from prior art in the name of the same Applicant the use of LEDs (flash) and/or displays, video cameras and/or luminosity sensors integrated in the smartphones for communicating (interrogating and programming) with the emergency lighting apparatuses, in the sense that the installer and/or the maintenance technician can, thanks to a specific application program installed on the smartphone (APP), communicate with the lighting apparatuses and emergency lighting apparatuses, so as to transmit and receive information. The apparatus allows, as well as adjusting the diagnostic functions, the programming and identification, by assigning a unique address, of each individual lighting apparatus within the system and/or the series of apparatuses considered.

The application program acquires the address thus allowing the installer to obtain the diagram (layout, type of product and programming) of the system installed, even if created with independent apparatuses.

The application program may associate with each apparatus strings of data containing a "description" field, for recognising the position of the lamp within the system, a "photo" field, which allows the apparatus to also be visually identified, and a "lamp code and description" field (a field which can be compiled automatically with the response of the lamp during the programming); moreover, it is possible at any time, with the apparatus powered, to modify the operation mode of the apparatus (non-permanent mode, permanent mode, permanent mode with reduced luminosity, dimming, etc.) and the duration of the emergency (1 h, 2h, 3h, etc.).

The application program (APP) installed on the smartphone may also allow a "logbook" of the system to be created, in which to automatically indicate not only the status of the apparatuses described, but also the characteristic events which occur in the system, in terms of date of performance of the tests, duration of the battery in the tests, charging status of the battery, code and description of the apparatus, programmed settings, type of error signalled by any multicolour LED present on the apparatus, etc; in this case, the user can, directly from the smartphone, instantaneously know the meaning of the error signalled by the multicolour LED and, if necessary, obtain information on any measures to be taken.

The data resulting from the registration of the lamps can be automatically entered in, or superposed on, a layout of the installation rooms, in order to uniquely identify the physical position of the apparatuses in the system, so as to allow a faster identification of the apparatus in the system by the maintenance technicians and personnel.

For example, during installation, by sending a sequence of coded luminous commands (using a specific application installed on the smartphone and the flash or the display integrated in it) to the apparatus, it is possible to program it, determine the type of operation (SE, SA, PS) and, in the specific case of emergency lighting apparatuses, specify the duration of operation in emergency mode (1 h, 2h, 3h, etc.).

During periodic maintenance or if the signalling LED indicates a fault, the operator can, again by sending coded commands by means of the smartphone, start test procedures on the apparatus described and/or send a request to obtain information identifying the apparatus, deleting errors, saving on the smartphone information relative to the operational status (for example, the charging status of the battery) and the errors detected (LED errors, battery errors, etc.); there is also the possibility of postponing the performance of the test, detecting the type of apparatus and any code, as well as the version of the apparatus software.

The data concerning each individual apparatus can be sent from the application program to a "cloud" resident on a suitable server, so as to be able to develop a range of functions, from a simple remote saving of system information by the user to the opening of a maintenance service by third parties; considering that each apparatus has registered on the smartphone and on the cloud the relative "logbook", all the information is always available, anywhere, in real time.

Moreover, the "logbook" saved on the "cloud" can be used by third party operators to immediately report to the client the need to intervene on the system, providing useful information, such as the lamps (position, ID and type) which require maintenance, the type of maintenance necessary (battery replacement, apparatus replacement, etc.), the exact codes of the spare parts necessary, any promotions to encourage maintenance, etc..

Apparatuses known from prior art in the name of the same Applicant comprise substantially:- a transmitter apparatus, consisting of a device equipped with an element which is able to emit light beams of a desired duration and intensity (for example, the flash and/or the display), also equipped with sensors suitable for capturing digital optical signals (video cameras and/or luminosity sensors) and integrating a control and programming system as well as a memory for housing suitable software,- an emergency lighting apparatus, which incorporates a receiver device consisting of a light-sensitive element associated with a decoding and control circuit, which is able to interface with the main circuit of the apparatus so as to carry out tests and/or perform other functions (such as attributing configurations to the emergency lighting apparatus) and which, if necessary, integrates a LED module controlled in series by a suitable MOSFET for generating the desired digital optical signal.

The smartphone is used as a transmitter for sending commands to the lighting apparatus through modulation of the switching ON of the flash and/or of the display integrated in it; for this purpose, use is made of a particular algorithm aimed at restoring the structure of the sequence of the command naturally distorted by the latency to which the transmission device (flash or display) is subjected (the latency being the time delay present during switching ON/OFF of the flash and/or the display, more specifically, smartphones are characterised by latency times which are very variable and considerably dependent on the original hardware and software characteristics, as well as on the number of applications open in "background" mode which engage the operating system).

Even though the prior art apparatus described above is extremely efficient and functional, there is a need to obtain a greater ease and convenience of use, as well a wider range of use, both for the ordinary lighting apparatuses and for the emergency lighting apparatuses.

The aim of this invention is therefore to make a remote control system for lighting apparatuses and emergency lighting apparatuses which simplifies the work of the installers and the maintenance technicians for the emergency lighting apparatuses, also allowing the autonomy tests and the
periodic functional tests to be programmed, the status of the battery to be monitored and the logbooks for the apparatuses to be automatically prepared.

Another aim of the invention is to provide a system for remotely controlling lighting apparatuses, which allows the remote adjustment of the luminosity and output of the lighting apparatus.

A further aim of the invention is to indicate a method for remotely controlling lighting apparatuses and emergency lighting apparatuses which can be implemented using the above-mentioned system.

These and other aims, which are described in more detail below, are achieved by a method for remotely controlling lighting apparatuses, according to appended claim 1, and by a control system which
implements the method, according to appended claim 11.

Further features and advantages of the invention will emerge more fully from the following description of a preferred embodiment of the system for remotely controlling lighting apparatuses, according to the invention.

The system according to the invention uses a software application (APP) which decodes the information collected (in the form of images or videos) from the lighting apparatuses and converts it into messages which can be used by the user, as well as managing the data collected, so as to plan the management of the entire lighting system, automatically collecting information regarding the performance of the lighting apparatuses and automatically filling in the logbook of an emergency lighting system (with the possibility of transferring, collecting and managing the data, automatically, in remote "clouds").

The software application, operating on any type of smartphone, allows control of the functionalities of the lighting apparatuses of a system operating both in simple lighting mode and in emergency mode, choosing the particular type directly on the smartphone after carrying out an initial login as a "basic" or "verified" user (the latter being reserved for the installers).

With regard to the functionalities of the emergency lighting systems, it is possible to select on the smartphone, using the above-mentioned software
application, the system amongst those installed by the user registered with login and password and have a description of the system with name and address; it is possible, at any time, to modify the name of the system, select on which area of the system (management area, entrance area, technical area, etc.) to work and, more specifically, on which lighting apparatus (for example, entrance door, lamp with cable, corridor display, meeting room display, etc.) to work.

More specifically, during installation of the emergency lighting apparatuses, a signalling LED provided for each lighting apparatus adopts a predetermined status depending on whether the apparatus is disconnected, powered from the mains supply and ready to receive commands from the software application of the smartphone or is connected and the communication with the smartphone is open (in which case it is possible to create the new system and insert each apparatus using the software application as described below, so that at the end of the procedure all the data is present in the reference portal).

Each system can be inserted directly on the smartphone using an "add system" button, with the relative description (system name) and data of the new system (client, address, etc.); for each system selected it is also possible to select a list of areas of the system, add an area with a predetermined name and/or add one or more lighting apparatuses (lamps) to the area selected with a relative description.

After the step for creating the system, it is possible, at any time and using the software application mentioned, to perform actions on the individual lighting apparatus selected, such as checking the status, modifying the settings and sending commands.

More specifically, after having selected the lamp on which to operate, it is possible, again using the software application resident on the smartphone, to proceed with the synchronizing of the lamp, which is divided into a step for unlocking the chosen lamp (using an optical command from the smartphone) and synchronizing the status of the lamp (by means of a message for acquiring a response to the unlocking); the synchronizing step, which comprises a step for initializing the lamp, a step of response by the lamp to the initializing step and a step for completion of the installation, allows the status of the lamp to be read on the smartphone using a series di parameters, such as lamp code, duration of the autonomy, duration of the autonomy test, operational mode, status of the battery, any autonomy and battery errors, etc., and to check any malfunctions or modify the operational parameters.

All the data recorded can be stored in cloud at the end of the communication of the above-mentioned data.

During this step it is also possible to activate specific tests directly from the software application of the smartphone, such as, for example, checking operation of the lamp, changing the lamp to RESET mode, activating an autonomy test or starting a functional test, for system maintenance purposes.

With regard to this, after again choosing the system, the area of the system and the lamp to be selected (the name of which can be modified at any time) and after, if necessary, taking a photo of the lamp selected to simplify the recognition and document the correct installation, it is possible, again directly from the smartphone, to signal any fault to the cloud, return the lamp to the original configuration (RESET mode) or remove the lamp from the cloud after uninstalling it.

Again for the purposes of a regular maintenance of the lamp, the lamp can be synchronized after an unlocking step and reading the status of the lamp on the smartphone, by reading a series of parameters, and checking any malfunctions or modifying the operational parameters (autonomy selection, SE/SA/PS selection, management of autonomy test, rapid charging, accelerated or effective autonomy test).

It is also possible to send specific commands from the smartphone to the apparatus under maintenance, using the software application, such as the switching ON of the SA/SE lamp, inhibition of the switching ON in an emergency ("rest mode"), starting an autonomy test, starting a functional test or the stopping of the test in advance.

With regard to the functionalities of the simple lighting apparatuses, a PROGRAMMING option on the smartphone is only visible with the "verified user" (installer) profile, whilst an end customer with a "basic user" profile can control the lamp as he/she pleases, adjusting the luminosity, switching the self-dimmer ON/OFF, activating the presence sensor and any delay linked to the sensor.

The user can therefore carry out various functions in a special window of the APP, such as:
- selecting the lamp code previously set by the installer, in such a way that the communication only occurs if the lamp code and the one set up on the apparatus coincide;
- manually adjusting the dimmer of the apparatus (this function cannot be carried out with the self -dimmer inserted or presence sensor activated);
- switching apparatus ON/OFF;
- switching the self-dimmer ON/OFF and switching the presence sensor ON/OFF (these functions are not enabled with the lamp switched OFF);
- synchronizing the apparatus with the smartphone once the configuration of the lamp has been selected.

It is also possible to set the delay of the presence sensor to a time varying between 30 seconds and 60 minutes, after which, if in the meanwhile the sensor has not been tripped by the movement of anyone, the apparatus starts its dimming ramp until reaching a minimum intensity set by the installer (the maximum and minimum output can only be set by a "verified user" (installer) and when the self-dimmer and presence sensor functions are activated by the user and the time necessary to change to the minimum output is always about 3 minutes, that is, the intensity of the apparatus changes from the maximum output to the minimum output gradually in approximately 3 minutes).

For each command to be sent to the lamp in question the synchronising is started by turning the smartphone with the flash towards the lamp and waiting for the end of the flashing of the flash and confirmation of the lamp on the screen of the smartphone.

Basically, every time the synchronisation is performed, the lighting apparatus responds with a flash with the exception of the synchronizing for the manual dimming and the switching ON/OFF performed by the user. The above-mentioned synchronizing steps allow the setting, using the smartphone APP, of the luminosity set-point (that is, the level of light necessary to guarantee the correct level of light, set during the design, in the room), with respect to which the apparatus adjusts the self-dimming if enabled, by self-calibration (auto-learning) or immediate calibration (with manual setting of the set-point), as well as the percentage of the set-point light necessary for the apparatus to change to the minimum output value (self-dimmer compensation); in this case, the lower the percentage set, the smaller will be the amount of light coming from the outside which is needed for the lamp to carry out the dimming and, in any case, in order to avoid too much difference in the dimming between apparatuses installed in a same room it is recommended that a high percentage be set, whilst in order to maximize the energy saving it is recommended that a low percentage be set.

Further settings which are possible using the smartphone APP are the sensitivity of the movement sensor (it is recommended that this is kept to a minimum to prevent false tripping or set to a maximum if the apparatus is installed at great heights) and the insertion of an unlocking code to prevent unauthorised persons from modifying the settings of the apparatus (it is also possible to block the use of the functions of the APP by selecting the DISABLE item); within the first minute from switching ON the apparatus the new code can be modified independently of the old code, whilst after the first minute it will be necessary to know the previous code.

The default settings are as follows:
- self-dimmer → ENABLED;
- self-calibration → ENABLED;
- self-dimmer compensation → 500%;
- presence sensor→ DISABLED;
- sensitivity → AVERAGE;
- presence sensor delay → 16 MINUTES;
- unlock code → 10.

Lastly, further procedures allow some of the above-mentioned settings to be performed on all the lighting apparatuses connected to the same electrical network simultaneously, using the switch for switching ON the apparatus and starting the sequence with the lamp already switched ON. More specifically, it is possible to enable the self-dimmer and self-calibration functions by quickly switching the lamp ON and OFF 4 times, it is possible to set an immediate calibration with the self-dimmer enabled, in order to calibrate the working point of the lamp with the light at that moment (setting to be carried out without contribution of sunlight), quickly switching the lamp ON and OFF 6 times, and it is possible to set a maximum output defined by the user (with self-dimmer disabled), using the smartphone APP described above, after quickly switching the lamp ON and OFF 8 times.

The technical features of the system and the method for remotely controlling lighting apparatuses according to this invention clearly emerge from the description, as do the advantages thereof.

More specifically, these relate to the following aspects:
- simplifying the work of the installers and the maintenance technicians of the firms;
- continuously controlling the functionality of all the emergency lamps of a system;
- possibility of adjusting the autonomy of the emergency lamps on the basis of the requirements (1h, 1.5h, 2h, 3h, 8h);
- possibility of defining whether the emergency lamp SA is of the SE, SA or PS type;
- possibility of programming the autonomy test and the functional test of the emergency lamps;
- possibility of keeping under control, automatically, the deadlines for the periodic functional tests on the emergency lamps;
- monitoring battery status;
- possibility of sending data to the "cloud" for preparing and keeping under control, automatically, the periodic register of each individual emergency lighting system, as requested by the current regulations;
- possibility of directly sending the test and "rest mode" commands to the emergency lighting apparatuses;
- possibility of adjusting the luminosity of the generic lighting lamps;
- possibility of switching dimmer ON/OFF;
- possibility of adjusting lamp output;
- possibility of activating and deactivating the presence sensor of the lamp and its delay;
- possibility of activating a code for unlocking the light bulb.

## Claims

1. Remote control method for lighting fixtures,
wherein said method uses a lighting apparatus or an emergency lighting apparatus of a lighting system, said lighting apparatus being provided with a light sensor, a decoding circuit and an optical collector, so that said lighting apparatus are controlled by means of a light beam coming from a smartphone, and a smartphone, controlled by a software application,
**characterized in that** said method provides the following phases:
- typing on the smartphone a login and a password as a basic user or a verified user;
- choosing on the smartphone a mode of simple lighting or emergency lighting;
- choosing on the smartphone a lighting system from the installed lighting systems and displaying a description of said chosen lighting system;
- choosing an area of said lighting system and a lighting apparatus of said lighting system;
- synchronizing the state of said lighting apparatus by sending a flash of the smartphone to said lighting apparatus and waiting for a confirmation on the screen of the smartphone;
- acquiring on said screen of the smartphone a plurality of parameters relating to the state of said lighting apparatus, such as a code, the duration of autonomy, the duration of the autonomy test, the operating mode, the battery status, the autonomy and battery errors, etc.;
- activating, by means of said flash of the smartphone, a plurality of tests on said lighting apparatus, such as functional tests, the activation of a reset mode, autonomy and/or functional tests.

2. A remote control method according to claim 1, **characterized in that** said lighting apparatus is controlled by said flash of the smartphone by performing a brightness adjustment, a power on, a power off or the adjustment of a dimmer and by activating a presence sensor, after sending a unique code from said smartphone to said lighting apparatus, said code being previously set by an installer on said lighting apparatus.

3. A remote control method according to claim 1, **characterized in that** said method provides for storing said emergency lighting apparatus within said smartphone with a classification according to whether the apparatus is disconnected, is powered by the power supply network and is ready to receive commands from the software application of the smartphone, or is connected and a communication with the smartphone is open.

4. A remote control method according to claim 3, **characterized in that** said synchronizing phase allows to carry out said storing phase and comprises a phase for initializing said emergency lighting apparatus, a phase according to which said apparatus is configured to reply to said initializing phase and an installing phase, according to which it is possible to read the status of said emergency lighting apparatus on said smartphone by means of a plurality of parameters, such as an apparatus code, the autonomy duration, the operating mode, the battery status, the autonomy and battery errors, and to check for any malfunctions and/or to modify some parameters.

5. A remote control method according to claim 4, **characterized in that,** during said installing phase of said emergency lighting apparatus, suitable tests are performed on said apparatus, such as verifying the apparatus operation, activating a reset mode, activating an autonomy test or a functional test.

6. A remote control method according to claim 4, **characterized in that** said software application sends commands to said emergency lighting apparatus, such as a power-on command, an emergency power-on inhibition, a duration test and/or a functional test.

7. A remote control method according to claim 1, **characterized in that** said synchronizing phase is performed for setting a predetermined brightness level, with respect to which said lighting apparatus adjusts an auto-dimming function by means of a self-calibration or a prompt calibration, and for setting a percentage of brightness so that said lighting apparatus delivers a minimum value of power.

8. A remote control method according to claim 7, **characterized in that** said auto-dimming function by means of a self-calibration is carried out through a power-on switch by turning off and turning on said lighting apparatus for 4

9. A remote control method according to claim 7, **characterized in that** said auto-dimming function by means of a prompt calibration is carried out through a power-on switch by turning off and turning on said lighting apparatus for 6 successive times.

10. A remote control method according to claim 1, **characterized in that** said software application sets a maximum value of power of said lighting apparatus, with self-dimming disabled, after having turned off and turned on said lighting apparatus for 8 successive times.

11. Remote control system adapted to implement a control method according to claim 1.

## Patentansprüche

1. Fernbedienungsverfahren für Beleuchtungsanlagen,
wobei das Verfahren eine Beleuchtungsvorrichtung oder eine Notbeleuchtungsvorrichtung eines Beleuchtungssystems verwendet, wobei die Beleuchtungsvorrichtung mit einem Lichtsensor, einer Decodierschaltung und einem optischen Kollektor bereitgestellt ist, so dass die Beleuchtungsvorrichtung mittels eines Lichtstrahls gesteuert wird, der von einem Smartphone kommt, und
ein Smartphone, das durch eine Softwareanwendung gesteuert wird,
**dadurch gekennzeichnet, dass** das Verfahren die folgenden Phasen bereitstellt:
- Eingeben eines Logins und eines Passworts als Basisbenutzer oder verifizierter Benutzer auf dem Smartphone;
- Auswählen eines einfachen Beleuchtungs- oder Notbeleuchtungsmodus auf dem Smartphone;
- Auswählen eines Beleuchtungssystems aus den installierten Beleuchtungssystemen auf dem Smartphone und Anzeigen einer Beschreibung des ausgewählten Beleuchtungssystems;
- Auswählen eines Bereichs des Beleuchtungssystems und einer Beleuchtungsvorrichtung des Beleuchtungssystems;
- Synchronisieren des Zustands der Beleuchtungsvorrichtung durch Senden eines Blitzes des Smartphones an die Beleuchtungsvorrichtung und Warten auf eine Bestätigung des Bildschirms des Smartphones;
- Erfassen einer Vielzahl von Parametern in Bezug auf den Zustand der Beleuchtungsvorrichtung auf dem Bildschirm des Smartphones, wie eines Codes, der Autonomiedauer, der Autonomietestdauer, des Betriebsmodus, des Batteriestatus, der Autonomie und Batteriefehler usw.;
- Aktivieren, mittels des Blitzes des Smartphones, einer Vielzahl von Tests an der Beleuchtungsvorrichtung, wie z. B. Funktionstests, der Aktivierung eines Rücksetzmodus, Autonomie- und/oder Funktionstests.

2. Fernbedienungsverfahren nach Anspruch 1,
**dadurch gekennzeichnet, dass** die Beleuchtungsvorrichtung durch den Blitz des Smartphones gesteuert wird, indem eine Helligkeitseinstellung, ein Einschalten, ein Ausschalten oder die Einstellung eines Dimmers durchgeführt wird, und indem ein Anwesenheitssensor aktiviert wird, nachdem ein eindeutiger Code von dem Smartphone an die Beleuchtungsvorrichtung gesendet wurde, wobei der Code zuvor durch eine Installationseinrichtung der Beleuchtungsvorrichtung eingestellt wurde.

3. Fernbedienungsverfahren nach Anspruch 1,
**dadurch gekennzeichnet, dass** das Verfahren das Speichern der Notbeleuchtungsvorrichtung in dem Smartphone mit einer Klassifizierung bereitstellt, und, wenn die Vorrichtung abgeschaltet ist, von dem Stromversorgungsnetz gespeist wird und bereit ist, Befehle von der Softwareanwendung des Smartphones zu empfangen oder, wenn diese verbunden ist und eine Kommunikation mit dem Smartphone offen ist.

4. Fernbedienungsverfahren nach Anspruch 3,
**dadurch gekennzeichnet, dass** die Synchronisierungsphase das Ausführen der Speicherphase ermöglicht und eine Phase zum Initialisieren der Notbeleuchtungsvorrichtung, eine Phase, gemäß der die Vorrichtung konfiguriert ist, um auf die Initialisierungsphase zu reagieren, und eine Installationsphase umfasst, gemäß der es möglich ist, den Zustand der Notbeleuchtungsvorrichtung auf dem Smartphone mittels einer Vielzahl von Parametern, wie einem Vorrichtungscode, der Autonomiedauer, dem Betriebsmodus, dem Batteriestatus, der Autonomie und Batteriefehler zu lesen und um eventuelle Fehlfunktionen festzustellen und/oder einige Parameter zu ändern.

5. Fernbedienungsverfahren nach Anspruch 4,
**dadurch gekennzeichnet, dass** während der Installationsphase der Notbeleuchtungsvorrichtung geeignete Tests an der Vorrichtung durchgeführt werden, wie das Verifizieren des Vorrichtungsbetriebs, Aktivieren eines Rücksetzmodus, Aktivieren eines Autonomietests oder eines Funktionstests.

6. Fernbedienungsverfahren nach Anspruch 4,
**dadurch gekennzeichnet, dass** die Softwareanwendung Befehle an die Notbeleuchtungsvorrichtung sendet, wie einen Einschaltbefehl, eine Noteinschaltsperre, einen Dauertest und/oder einen Funktionstest.

7. Fernbedienungsverfahren nach Anspruch 1,
**dadurch gekennzeichnet, dass** die Synchronisationsphase zum Einstellen eines vorbestimmten Helligkeitsniveaus durchgeführt wird, in Bezug auf das die Beleuchtungsvorrichtung eine automatische Dimmfunktion mittels einer Selbstkalibrierung oder einer sofortigen Kalibrierung einstellt, und zum Einstellen eines Prozentsatzes der Helligkeit, so dass die Beleuchtungsvorrichtung einen minimalen Leistungswert liefert.

8. Fernbedienungsverfahren nach Anspruch 7,
**dadurch gekennzeichnet, dass** die automatische Dimmfunktion mittels einer Selbstkalibrierung über einen Einschaltschalter ausgeführt wird, indem die Beleuchtungsvorrichtung 4 Mal hintereinander aus- und eingeschaltet wird.

9. Fernbedienungsverfahren nach Anspruch 7,
**dadurch gekennzeichnet, dass** die automatische Dimmfunktion mittels einer sofortigen Kalibrierung über einen Einschaltschalter ausgeführt wird, indem die Beleuchtungsvorrichtung 6 Mal hintereinander aus- und eingeschaltet wird.

10. Fernbedienungsverfahren nach Anspruch 1,
**dadurch gekennzeichnet, dass** die Softwareanwendung einen Maximalwert der Leistung der Beleuchtungsvorrichtung einstellt, wobei die Selbstdimmung deaktiviert ist, nachdem die Beleuchtungsvorrichtung 8 Mal hintereinander aus- und eingeschaltet wurde.

11. Fernbedienungssystem, das ausgelegt ist, um nach Anspruch 1 implementiert zu werden.

## Revendications

1. Procédé de commande à distance d'appareils d'éclairage,
dans lequel ledit procédé utilise un appareil d'éclairage ou un appareil d'éclairage de secours d'un système d'éclairage, ledit appareil d'éclairage étant pourvu d'un capteur de lumière, d'un circuit de décodage et d'un collecteur optique, de sorte que ledit appareil d'éclairage est commandé au moyen d'un faisceau lumineux provenant d'un smartphone, et un smartphone, commandés par un logiciel,
**caractérisé en ce que** ledit procédé comprend les étapes consistant à :
- taper sur le smartphone un identifiant et un mot de passe en tant qu'utilisateur de base ou utilisateur vérifié ;
- choisir sur le smartphone un mode d'éclairage simple ou d'éclairage de secours ;
- choisir sur le smartphone un système d'éclairage parmi les systèmes d'éclairage installés et afficher une description dudit système d'éclairage choisi ;
- choisir une zone dudit système d'éclairage et un appareil d'éclairage dudit système d'éclairage ;
- synchroniser l'état dudit appareil d'éclairage en envoyant un flash du smartphone audit appareil d'éclairage et en attendant une confirmation sur l'écran du smartphone ;
- acquérir sur ledit écran du smartphone une pluralité de paramètres relatifs à l'état dudit appareil d'éclairage, tels qu'un code, la durée d'autonomie, la durée du test d'autonomie, le mode de fonctionnement, l'état de la batterie, l'autonomie et les erreurs de batterie, etc. ;
- activer, au moyen dudit flash du smartphone, une pluralité de tests sur ledit appareil d'éclairage, tels que des tests fonctionnels, l'activation d'un mode de réinitialisation, des tests d'autonomie et/ou fonctionnels.

2. Procédé de commande à distance selon la revendication 1,
**caractérisé en ce que** ledit appareil d'éclairage est commandé par ledit flash du smartphone en effectuant un réglage de luminosité, une mise sous tension, une mise hors tension ou le réglage d'un gradateur et en activant un capteur de présence, après l'envoi d'un code unique dudit smartphone à ladite appareil d'éclairage, ledit code étant préalablement défini par un installateur sur ledit appareil d'éclairage.

3. Procédé de commande à distance selon la revendication 1,
**caractérisé en ce que** ledit procédé permet de stocker ledit appareil d'éclairage de secours dans ledit smartphone avec une classification selon que l'appareil soit déconnecté, alimenté par le réseau d'alimentation et est prêt à recevoir des instructions du logiciel du smartphone, ou soit connecté et qu'une communication avec le smartphone soit ouverte.

4. Procédé de commande à distance selon la revendication 3,
**caractérisé en ce que** ladite phase de synchronisation permet de réaliser ladite phase de stockage et comprend une phase d'initialisation dudit appareil d'éclairage de secours, une phase selon laquelle ledit appareil est configuré pour répondre à ladite phase d'initialisation et une phase d'installation, selon laquelle il est possible lire l'état de cet appareil d'éclairage de secours sur ledit smartphone au moyen d'une pluralité de paramètres, tels qu'un code d'appareil, la durée d'autonomie, le mode de fonctionnement, l'état de la batterie, l'autonomie et les erreurs de batterie, et détecter d'éventuels dysfonctionnements et/ou modifier certains paramètres.

5. Procédé de commande à distance selon la revendication 4,
**caractérisé en ce que**, pendant ladite phase d'installation dudit appareil d'éclairage de secours, des tests appropriés sont effectués sur ledit appareil, tels que la vérification du fonctionnement de l'appareil, l'activation d'un mode de réinitialisation, l'activation d'un test d'autonomie ou d'un test de fonctionnement.

6. Procédé de commande à distance selon la revendication 4,
**caractérisé en ce que** ladite application logicielle envoie des instructions audit appareil d'éclairage de secours, telles qu'une instruction de mise sous tension, une inhibition de mise sous tension de secours, un test de durée et/ou un test de fonctionnement.

7. Procédé de commande à distance selon la revendication 1,
**caractérisé en ce que** ladite phase de synchronisation est réalisée pour établir un niveau de luminosité prédéterminé, par rapport auquel ledit appareil d'éclairage ajuste une fonction d'atténuation automatique au moyen d'un auto-étalonnage ou d'un étalonnage rapide, et pour établir un pourcentage de luminosité de sorte que l'appareil d'éclairage fournit une valeur minimale de puissance.

8. Procédé de commande à distance selon la revendication 7,
**caractérisé en ce que** ladite fonction d'atténuation automatique au moyen d'un auto-étalonnage est réalisée au moyen d'un interrupteur de mise sous tension en éteignant et en allumant ledit appareil d'éclairage 4 fois à la suite.

9. Procédé de commande à distance selon la revendication 7,
**caractérisé en ce que** ladite fonction d'atténuation automatique au moyen d'un étalonnage rapide est réalisée au moyen d'un interrupteur de mise sous tension en éteignant et en allumant ledit appareil d'éclairage 6 fois à la suite.

10. Procédé de commande à distance selon la revendication 1,
**caractérisé en ce que** ledit logiciel établit une valeur maximale de puissance dudit appareil d'éclairage, avec auto-atténuation désactivée, après avoir éteint et allumé ledit appareil d'éclairage 8 fois à la suite.

11. Système de commande à distance adapté pour mettre en oeuvre un procédé de commande selon la revendication 1.
